(19) Europäisches Patentamt

European Patent Office

Office européen des brevets

(11) EP 0 486 922 B1

(12) EUROPÄISCHE PATENTSCHRIFT

(45) Veröffentlichungstag und Bekanntmachung des Hinweises auf die Patenterteilung:
04.09.1996 Patentblatt 1996/36

(51) Int Cl.⁶: G01R 31/02, G01R 31/302, G02F 1/133

(21) Anmeldenummer: 91119235.9

(22) Anmeldetag: 12.11.1991

(54) **Einrichtung zur Kontrolle einer Flüssigkristallanzeige (LCD)**

Arrangement for checking a liquid crystal display

Agencement de vérification d'un affichage à cristaux liquides

(84) Benannte Vertragsstaaten:
AT DE ES FR GB IT SE

(30) Priorität: 16.11.1990 DE 4036521

(43) Veröffentlichungstag der Anmeldung:
27.05.1992 Patentblatt 1992/22

(73) Patentinhaber: VDO Adolf Schindling AG
D-60326 Frankfurt/Main (DE)

(72) Erfinder: Adams, Jürgen, Dipl.-Ing. (FH)
W-7730 Villingen-Schwenningen (DE)

(56) Entgegenhaltungen:
EP-A- 0 031 015          EP-A- 0 135 331
EP-A- 0 173 931

**Beschreibung**

Die Erfindung bezieht sich auf eine Einrichtung zur visuellen Kontrolle einer einwandfreien Funktion von Flüssigkristallanzeigen, LCD's, gemäß dem Oberbegriff des ersten Anspruchs.

Die Flüssigkristallanzeigen (LCD's) werden mit zunehmendem Maße in vielen Bereichen der Meßtechnik zur digitalen Anzeige von physikalischen Meßergebnissen angewandt. Besonders hohe Anforderungen an die Funktionssicherheit der LC-Anzeigen werden dann gestellt, wenn es sich bei einer Anwendung von Flüssigkristall-Anzeigen in eichpflichtigen Geräten, beispielsweise im Taxameter, in Treibstoffzapfsäulen, in Verbrauchsmessern, in Registrierkassen und ähnlichen Geräten handelt.

Mit der Anwendung in derartigen Geräten sind auch Maßnahmen bekannt geworden, die geeignet sind, Fehlanzeigen zu reduzieren bzw. erkennbar zu machen. Durch eine einfache Redundanz erreicht man bei einer doppelten Segmentausbildung der Anzeigeelemente eine erhöhte Sicherheit in der Darstellung der abzubildenden Zeichen oder Zahlen. Bei Ausfall nur eines Teils des doppelt dargestellten Segments bleibt eine Lesefähigkeit einer angesteuerten Ziffer erhalten bei gleichzeitiger Erkennung einer teilweise fehlerhaften Funktionsweise der Anzeige. Durch diese Einrichtung wird zwar ein Teil der Fehlanzeigen erkannt, es besteht jedoch auch die Möglichkeit, daß bei gleichzeitigem Ausfall eines doppelt angeordneten Segmentbalkens dennoch eine lesbare Ziffer entsteht und eine derart entstehende Falschanzeige unerkannt bleibt. Darüber hinaus ist für die Einführung dieser Maßnahme eine besondere, entsprechend ausgebildete Flüssigkristallanzeige sowie eine angepaßte Ansteuerung erforderlich.

Eine weitere Verbesserung in der Sicherheit der Anzeige erreicht man durch eine Ausbildung der Anzeigeelemente als Matrix-Anzeige. Eine dabei erzielbare, erhöhte Hamming-Distanz steigert die Darstellungssicherheit nochmals in Abhängigkeit des Matrixformates. Eine vollständige Sicherheit ist jedoch auch bei dieser Anordnung nicht gewährleistet, da ein Ausfall eines Segmentbalkens nicht signalisiert wird. Bedingt durch die Multiplexrate verringert sich bei dieser Anordnung der Kontrast bei seitlicher Betrachtung der Anzeige.

Eine andere bekannte Einrichtung zur Erkennung von Fehlanzeigen benutzt das Verfahren einer Stromschleifentechnik, bei der durch die Segmentelektroden ein Prüfstrom von einem Anschlußpunkt zu einem anderen, unabhängigen Anschlußpunkt geleitet wird. Eine Kontrolle der Anwesenheit oder Abwesenheit eines Prüfstromes gibt dabei Auskunft über den Zustand jedes einzelnen Segments bzw. der Anzeige. Für diese Funktionskontrolle ist eine besondere, anwendungsspezifische Flüssigkristallanzeige und eine spezielle Ansteuerung erforderlich. Aufgrund der unvermeidlichen Verdoppelung der LCD-Anschlüsse ist andererseits wieder mit einer entsprechend höheren Ausfallwahrscheinlichkeit der Kontaktstellen zu rechnen.

Durch eine hochohmige Überlagerung einer Testspannung an den LCD-Anschlüssen gemäß EP-A-0 173 931, aus der der Oberbegriff des Anspruchs 1 abgeleitet wurde, erreicht man eine erhöhte Erkennbarkeit von Signalunterbrechungen zur Flüssigkristallanzeige dergestalt, daß eine Signalunterbrechung die Testspannung zur Wirkung kommen läßt und sich durch ein Blinken des betroffenen Segments anzeigt. Wenn eine Anwendung dieser Einrichtung nicht schon konstruktiv berücksichtigt ist, läßt sich das Testverfahren nur sehr schlecht nachrüsten. Die damit erzielbare Kontrolle des Signalweges reicht nur bis zu den Anschlüssen der Flüssigkristallanzeige; die kontrastbildende Stelle, die Segmentelektrode, wird bezüglich ihrer Funktion nicht überwacht. Auch bei Segment-Gruppenanordnungen, insbesondere in Multiplex-Systemen, erreicht man zwar, daß beim Ausfall von Segmentgruppen eine Segmentkombination entsteht, die nicht als eine Zahl interpretierbar ist, es ist jedoch dazu eine Sonderform der Flüssigkristallanzeige und eine besondere Ansteuerung erforderlich. Auch ist dieses Testverfahren bei beispielsweise 14-Segment-Displays nicht mehr ausreichend, da durch Gruppen-Ausfälle von Segmenten wieder interpretierbare Zahlen oder Zeichen entstehen können.

Aufgabe der Erfindung ist es, eine Einrichtung zur visuellen Kontrolle der Funktion von Flüssigkristallanzeigen (LCD's) in Geräten zu schaffen, die als Kontrolleinrichtung ohne tiefgreifende, konstruktive Maßnahmen in Geräten mit LC-Anzeigen nachrüstbar und anwendbar ist.

Die Aufgabe der Erfindung wird durch die Einrichtung nach Anspruch 1 gelöst.

Vorteilhafte Ausführungsformen des Gegenstandes der Erfindung sind in den Unteransprüchen angegeben.

In der nachfolgenden Beschreibung und den Zeichnungen sind Ausführungbeispiele der Erfindung beschrieben und dargestellt.

Es zeigt die

Fig. 1 ein schematisiertes Schnittbild durch eine LCD mit Funktionskontrolle und Anschlußverbindungen über Leitgummi-Kontaktstreifen,

Fig. 2 ein Ersatzschaltbild für die LCD-Funktionskontrolle mit zusätzlicher Einkopplung der Testspannung auf der Sichtseite der LCD,

Fig. 3 ein Ersatzschaltbild für die LCD-Funktionskontrolle mit Leitungsunterbrechung in der Deckelektrode eines Segmentes,

Fig. 4 ein Ersatzschaltbild für die LCD-Funktionskontrolle mit Leitungsunterbrechung in der Rückelektrode eines Segmentes,
Fig. 5 eine schematisierte Darstellung einer LC-Anzeige mit Funktionskontrolle und Unterbrechung in der Zuleitung zu einem Segment.

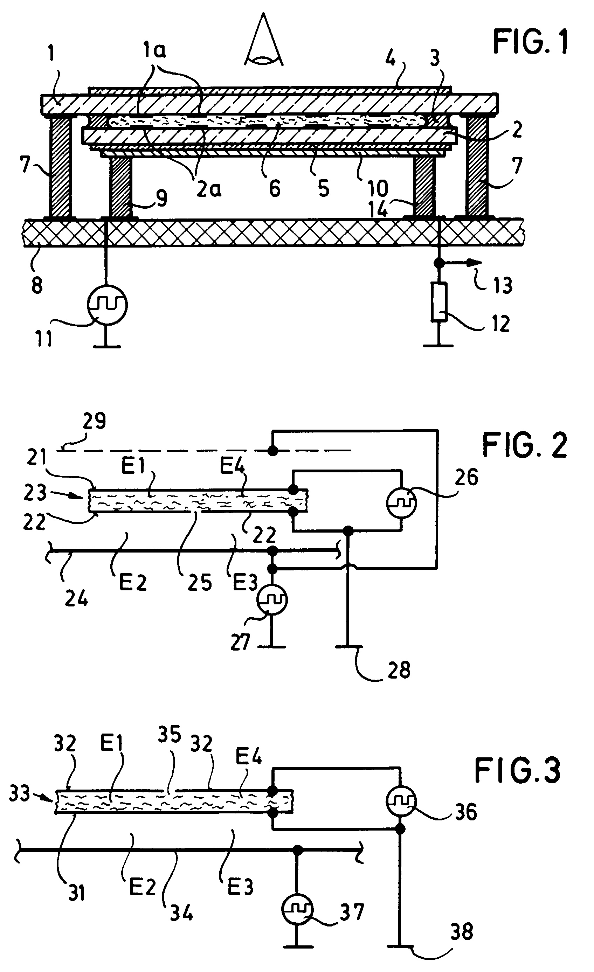

In der Fig. 1 ist ein schematisiertes Schnittbild durch eine Flüssigkristallanzeige (auch LCD bezeichnet) mit einer erfindungsgemäßen Funktionskontrolle dargestellt. Im Aufbau besteht eine Flüssigkristall-Anzeige bekanntlich aus einer Deckglasplatte 1 auf der Sichtseite und einer parallel dazu angeordneten Rückglasplatte 2, die in einem bestimmten Abstand durch ein Glaslot bzw. eine Klebeschicht 3 in der Außenzone miteinander verbunden sind und so einen Zellenraum 6 bilden, der mit einem nematischen Flüssigkristall gefüllt und hermetisch geschlossen ist. Die Innenflächen der Glasplatten 1 und 2 sind mit transparenten Elektrodenschichten einer Deckelektrode la und einer Rückelektrode 2a in der entsprechend gewünschten Anzeigekonfiguration überzogen. Auf die Außenflächen der Feldeffekt-Anzeigen, nämlich auf die Deckglasplatte 1, ist auf der Sichtseite ein Deck-Polarisator 4, auf die Rückseite ein Rück-Polarisator 5 mit integriertem Reflektor aufgeklebt. Für die Zuleitung einer Steuerspannung sind Kontaktstreifen 7 oder Leitgummiverbinder für eine Signalzuleitung von einer Leiterplatte 8 an die LCD vorgesehen. In gleicher Weise sind Kontaktstreifen als Zuleitungen 9 vorgesehen, die die Übertragung einer Testspannung von einer Testspannungssignalquelle 11 über Signalleitungen auf der Leiterplatte 8 und die Zuleitungen 9 an eine Elektrode 10 zur Einkopplung der Testspannung in die LCD besorgen. Am anderen Ende der Elektrode 10 ist eine Abgangsleitung 14, ebenfalls als Kontaktstreifen ausgebildet, angeordnet für den Abgriff der Testspannung und Zuleitung in eine Kontrollschleife 12, 13. Die Kontrollschleife 12, 13 besteht aus einem Schleifenwiderstand 12 zur Überprüfung der Testspannung und einer Abgriffsleitung 13 zur Übernahme eines Schleifen-Signals.

In Fig. 2 ist ein Ersatzschaltbild für die LCD-Funktionskontrolle mit einer zusätzlichen Einkopplung der Testspannung auf der Sichtseite der LCD. In vereinfachter Darstellung ist eine Deckelektrode 21 eines Segments und parallel eine Rückelektrode 22 eines Segments dargestellt, zwischen welchen eingeschlossen sich Flüssigkristall 23 befindet. Hinter der Flüssigkristallzelle ist eine Elektrode 24 zur Einkopplung der Testspannung angeordnet. Eine Unterbrechung 25 in der Rückelektrode 22 simuliert den Fehlerzustand. Eine Segment-Ansteuersignalquelle 26 ist mit der Deckelektrode 21 und der Rückelektrode 22 leitend verbunden. Eine Testspannungs-Signalquelle 27 ist mit der Einkopplungs-Elektrode 24 verbunden und kann gleichzeitig eine zusätzliche Einkopplungs-Elektrode 29 auf der Sichtseite der LCD mit einer Testsignalspannung versorgen. Beide Spannungsquellen 26 und 27 sind an ein gemeinsames Bezugspotential (Masse) 28 der Schaltung nach Fig. 2 angelegt. Bei angelegten Spannungsquellen 26 und 27 entsteht ein elektrisches Feld EI im Bereich zwischen der Deckelektrode 21 und einem durch die Unterbrechung 25 abgetrennten und isolierten Teil der Rückelektrode 22 eines Segments. Ein weiteres elektrisches Feld E2 entsteht zwischen dem isolierten Teil der Rückelektrode 22 und der Einkoppelelektrode 24. Ein drittes elektrisches Feld E3 baut sich auf zwischen dem Teil der intakten Rückelektrode 22 und der Einkoppelelektrode 24. Schließlich existiert ein viertes elektrisches Feld E4 in einem intakten Bereich zwischen den Elektroden 21 und 22 des betreffenden Segments.

Ein anderes Ausführungsbeispiel ist angegeben in Fig. 3, wo ein Ersatzschaltbild für die LCD-Funktionskontrolle gezeigt ist mit einer Leitungs-Unterbrechung 35 in einer Deckelektrode 32 eines Segments. Der zwischen Deckelektrode 32 und einer parallel angeordneten Rückelektrode 31 symbolisierte Zellenraum ist wiederum mit einem Flüssigkristall 33 gefüllt. Eine Elektrode 34 zur Einkopplung der Testspannung ist mit einer Testspannungs-Signalquelle 37 verbunden, deren andere Seite an eir Bezugspotential (Masse) 38 gelegt ist. Die Segment-Ansteuerungssignalquelle 36 ist an Deck- (32) und Rückelektrode 31 angeschlossen und liegt mit der Rückelektrode 31 am Bezugspotential 38. Im Betriebszustand entsteht wiederum ein elektrisches Feld EI zwischen Rückelektrode 31 und einem unterbrochenen Teil der Deckelektrode 32. Ein elektrisches Feld E2 entsteht zwischen der Einkoppelelektrode 34 und dem gestörten Teil des Segments mit der isolierten Deckelektrode 32. Ein elektrisches Feld E3 entsteht zwischen der Einkoppelelektrode 34 und einem intakten Bereich des Segments und schließlich entsteht ein elektrisches Feld E4 im intakten Teil des Segments.

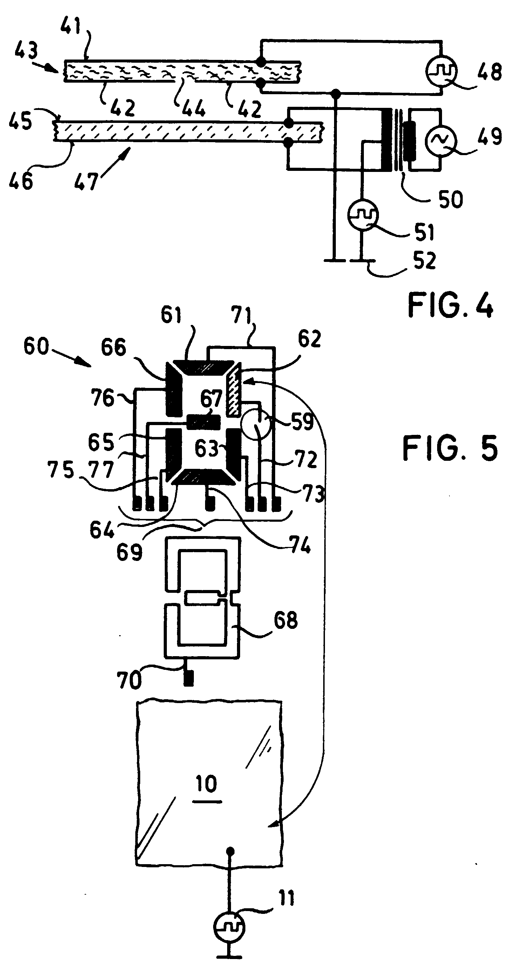

In der Darstellung nach Fig. 4 ist eine Ersatzschaltung angegeben, bei der eine Rückelektrode 42 des Segments eine Unterbrechung 44 aufweist. Das Segment ist symbolisch dargestellt durch eine Deckelektrode 41, eine Rückelektrode 42 (mit Unterbrechung 44) und von diesen eingeschlossenen Flüssigkristall 43 und wird durch eine Segment-Ansteuersignalquelle 48 beaufschlagt. Zur Einkopplung einer Testspannung dient eine Elektrolumineszenz-Beleuchtungsfolie 45 bis 47, die im wesentlichen aus einer transparenten Deckelektrode 45, einer reflektierenden Rückelektrode 46 und einer dazwischen eingebrachten, Licht aussendenden Schicht 47 besteht. Eine Ansteuerspannungsquelle 49 für die Beleuchtungsfolie 45 bis 47 ist an die Eingangsseite des Transformators 50 zur Umsetzung der Ansteuerspannung aus der Spannungsquelle 49 auf Betriebswerte für die Beleuchtungsfolie 45 bis 47 angeschlossen. Sekundärseitig des Transformators 50 ist ein Mittelabgriff zur Einkopplung einer Testspannung aus einer Testspannungs-Signalquelle 51 vorgesehen. Die Ansteuersignalquelle 48 und die Testspannungs-Signalquelle 51 sind an ein gemeinsames Bezugspotential (Masse) 52 gelegt.

In Fig. 5 ist eine 7-Segment-Anzeige 60 mit einer Anordnung von sieben Deckelektroden la entsprechend den Segmentbalken 61 bis 67 zur Darstellung der Ziffern von "0" bis "9" angegeben, dessen Zuleitungen 71 bis 77 zu einer Anschlußleiste 69 aus der Flüssigkristallzelle herausgeführt sind. Deckungsgleich hinter den Segmenten 61 bis 67 ist eine gemeinsame Rückelektrode 68 zu den Segmenten angeordnet und über einen Rückelektroden-Anschluß 70 nach außen geführt. Schließlich ist, wie auch schon in Fig. 1 angegeben, auf der Rückseite der 7-Segment-Anzeige eine die Rückfläche der gesamten LCD überdeckende, durchgehend leitfähige Elektrode 10 (entsprechend der Elektrode 10 in Fig. 1) vorgesehen, die der Einkopplung der Testspannung aus der Testspannungs-Signalquelle 11 dient. Für die Simulierung eines Fehlerfalles ist gemäß der Darstellung nach Fig. 5 eine Unterbrechung 59 in der Zuleitung 72 beispielsweise zum Segmentbalken 62 angezeigt. Ein von der Einkoppelelektrode 10 ausgehendes, elektrisches Feld wirkt sich auf den an sich von der Ansteuerung abgetrennten Segmentbalken 62 derart aus, daß sich der Segmentbalken 62 im Betrieb durch "Blinken" von den übrigen Segmentbalken 61 und 63 bis 67 unterscheidet und den Fehlerfall optisch anzeigt. Dieser Vorgang ist nachfolgend erklärt.

In den weit verbreiteten - und als Standard anzusehenden - Feldeffekt-Flüssigkristallanzeigen (LCD's) wird die Kontrastbildung in einem Segment durch ein elektrisches Feld E4 bewirkt, welches sich zwischen den korrespondierenden Elektroden la und 2a eines Segmentes in dem dazwischen liegenden Flüssigkristall 6, 23, 33, 43 bei Anlegen einer entsprechenden Steuerspannung 26, 36, 48 ausbildet. Hierbei erfolgt eine Drehung des Lichtvektors in der Flüssigkristallschicht 6, 23, 33, 43 dergestalt, daß ein durch die Polarisatoren 4 und 5 auf den zellenbegrenzenden Glasscheiben 1 und 2 durchtretendes Licht entweder "durchgelassen" oder "behindert" (absorbiert) wird.

Tritt nun eine Unterbrechung 59 in der Zuleitung 72 einer Elektrode eines Segmentes 62 oder einer Segmentgruppe (z. B. bei Multiplex-Anzeigen) auf, so kann naturgemäß ein elektrisches Feld E4 nicht mehr durch die Steuerspannung 26, 36, 48 aufgebaut werden, d. h. das Segment 62 fällt aus. Gleiches tritt auf, wenn beispielsweise bedingt durch sehr schmale Leiterbahnen auf dem Glas der LCD Unterbrechungen 25, 35, 44 auftreten, die von außen im Betrieb "nicht feststellbar" sind.

Die so durch den Fehlerfall "Unterbrechung" 25, 35, 44, 59 isolierte Elektrode 22, 32, 42, 62 ist elektrisch neutral gegenüber der korrespondierenden Segmentelektrode 2a, 21, 31, 41. Diese Neutralität ist kapazitiv, also mittels eines "starken" äußeren, elektrischen Feldes beeinflußbar, so daß sich durch kapazitive Kopplung die "isolierte" Elektrode 22, 32, 42, 62 dynamisch auf ein von der korrespondierenden Segmentelektrode 2a, 21, 31, 41 abweichendes Potential bringen läßt. Das hierbei entstehende elektrische Feld EI zwischen den Segmentelektroden führt dann wieder zur Kontrastbildung in der oben beschriebenen Art.

Da der verbleibende, endliche Übergangswiderstand einer von der Zuleitung abgetrennten Elektrode 22, 32, 42, 62 zum Abbau des durch kapazitive Kopplung erzeugten Feldes zur korrespondierenden Segmentelektrode 2a, 21, 31, 41 führt, muß durch z. B. einen Polaritätswechsel des "starken" äußeren Feldes die "isolierte" Elektrode 22, 32, 42, 62 wieder "geladen" werden.

Mit der doppelten Frequenz des Wechselns des äußeren Feldes E2 erfolgt nun der Auf- und Abbau des elektrischen Feldes E1 zwischen der isolierten Elektrode 22, 32, 42, 62 und der korrespondierenden Segmentelektrode 2a, 21, 31, 41. Einhergehend hiermit erscheint ein solchermaßen defektes Segment "blinkend" und ist visuell leicht erkennbar und damit als fehlerhaft markiert.

Das zur Einkopplung der Testspannung erforderliche Potential (Amplitude der Testspannung) ist abhängig von:

a) dem Mindestwert des elektrischen Feldes zwischen den korrespondierenden Segmentelektroden (beispielsweise 21 zu 22 bzw. die Innenseiten von Pos. 1 zu Pos. 2) zur Beeinflussung des Flüssigkristalls 23 bzw. 6 zum Zweck der Lichtvektor-Drehung,

b) den Abstandsverhältnissen der Segmentelektroden im Mittel (beispielsweise der Pos. 21 und 22, bzw. 1 und 2 Innenseite) zur Testspannungs-Einkoppelelektrode 24, 29 bzw. 10,

c) den Verhältnissen der effektiven, die Elektrizitätskonstanten der Materialien zwischen den Elektroden mit $\varepsilon_{1e}$ : Wert der Flüssigkristall-Zelle (Segment) und $\varepsilon_{2e}$ : Wert der Materialien zwischen Flüssigkristallzelle und Testspannungs-Einkoppelelektrode.

Übliche LCD's benötigen zur Kontrastbildung eine Zellenspannung von $/U_{21,22}/\sim 3$ V.

Im Fall einer Unterbrechung 25 teilt sich das durch die Testspannung erzeugte Feld auf in E1 als Anteil innerhalb der Zelle und E2 als Anteil außerhalb der Zelle.

Die Spannungsaufteilung erfolgt also näherungsweise in Abhängigkeit der relativen Abstände $d_{21,22}$ zu $d_{22,24}$, der wirksamen effektiven Dielektrizitätskonstanten $\varepsilon_{1e}$, $\varepsilon_{2e}$ sowie der wirksamen Flächenverhältnisse $F_{21,22}$ zu $F_{22,23}$.

$$\frac{/U_{21,22}/}{/U_{22,24}/} = \frac{\varepsilon_{2e} \cdot d_{21,22} \cdot F_{24}}{\varepsilon_{1e} \cdot d_{22,24} \cdot F_{22}}$$

mit

$d_{22,24} \simeq 1,5$ mm :      Abstand der Testspannungs-Einkoppel-elektrode 24 zu einer Segmentelektrode 22

$d_{21,22} \simeq 8$ um :      Abstand der Segmentelektroden 21, 22 zueinander

$/U_{21,22}/ \simeq 3\,V$ :    Betrag der kontrastwirksamen Spannung an den Segmentelektroden 21, 22

$/U_{22,24}/$ :    Betrag der anzulegenden Testspannung aus 27

$\varepsilon_{1e} = 8$ :    Effektive, relative Dielektrizitätskonstante der Materialien zwischen den Segmentelektroden 21 und 22

$\varepsilon_{2e} = 10$ :    Effektive, relative Dielektrizitätskonstante der Materialien zwischen der Segmentelektrode 22 und der Testspannungs-Einkoppelelektrode 24

$F_{22}$ :    Elektrodenfläche der von der Zuleitung abgetrennten Elektrode 22

$F_{24}$ :    Elektrodenfläche als Mittelwert der Fläche der "isolierten" Elektrode 22 und der Testspannungs-Einkoppelelektrode 24

$F_{24}/F_{22} \sim 5 \ldots 15$ :    Geschätztes Wirkungsverhältnis der Elektrodenflächen eines gestörten Segmentes.

Bei stark vereinfachter Betrachtung ergibt sich ein Betrag der Testspannung von $/U_{22,23}/\sim 40\,V$, die notwendig ist, um bei Unterbrechungen der oben bezeichneten Art eine Kontrastwirkung hervorzurufen.

Wird auf der Deckseite der LCD (Sichtseite) eine weitere Test-Elektrode 29 (transparent) angebracht und mit der gleichen Testspannung aus der Testspannungssignalquelle 27 beaufschlagt, so reduziert sich der Betrag der Testspannung bei gleicher Kontrastwirkung auf etwa den halben Wert.

Tritt eine Unterbrechung 35 in der Deckelelektrode 32 gemäß Fig. 3 auf, so wird auch hier im unterbrochenen, von der Zuleitung abgetrennten Teil dieser Elektrode 32 durch die Testspannungs-Einkoppel-Elektrode 34 und eine Testspannung aus der Testspannungssignalquelle 37 eine Ladungsverschiebung verursacht.

Die zwischen der Testspannungs-Elektrode 34 und der abgetrennten Segment-Elektrode 32 befindliche Segment-Rückelektrode 31 weist eine wesentliche geringere Fläche gegenüber der Testspannungs-Einkoppel-Elektrode 34 auf, so daß sie kaum abschirmend wirkt.

Die Testspannung an der Einkoppel-Elektrode 34 wirkt auch auf die noch normal an der Segment-Ansteuerungssignalquelle 36 angeschlossenen Segment-Elektroden. Die dort von der Testspannung aus der Elektrode 34 angeregte Ladungsverschiebung verursacht jedoch nur einen vernachlässigbaren, überlagerten Strom in der Segment-Ansteuerungsquelle 36 und entsprechend einen vernachlässigbaren Spannungshub, der nicht kontrastwirksam wird.

Zur Erzeugung der Testspannung für die Einkoppelelektrode 34 aus einer üblichen 5 Volt-Versorgung genügt, wie nicht näher angezeigt ist, eine zyklische Aufladung der Testspannungs-Einkoppel-Elektrode 34 mittels beispielsweise einer "freilaufenden" Drossel, welche zyklisch zur Generierung des Ladeimpulses durch einen Ladestrom aufgeladen wird. Die Lade-/Entlade-Zeit bestimmt dann die "Blink-Frequenz" eines defekten Segmentes. Andere Schaltungen, wie beispielsweise kapazitive Ladungspumpen, sind ebenfalls einsetzbar.

Zur Überprüfung der Testspannungs-Einkopplung ist, wie in Fig. 1 angegeben ist, eine Kontrolleinrichtung 12, 13 denkbar, die durch eine separat zur Anschlußstelle der Testspannungs-Einkoppelelektrode 10 angebrachte Abgriffsleitung 13 das Vorhandensein der Testspannung auf der Elektrode 10 sicherstellt. Tritt z. B. in der Zuleitung der Testspannungs-Signalquelle 11 zur Elektrode 10 eine Unterbrechung auf oder am Testabgriff 13 eine Unterbrechung auf, so kann dies von der Kontrolleinrichtung 12, 13 festgestellt und entsprechend ausgewertet werden.

Abschließend wird angemerkt, daß sich die erfindungsgemäße Einrichtung insbesondere zur Verwendung in eichpflichtigen Geräten eignet, wenn behördlicherseits die optische Erkennung eines schadhaften Segments einer Flüssigkristallanzeige gefordert wird. Die hohen Anforderungen an die Funktionssicherheit der LC-Anzeigen lassen sich mit der erfindungsgemäßen Einrichtung ohne tiefgreifende, konstruktive Maßnahmen in den jeweiligen Geräten erfüllen.

**Patentansprüche**

1.  Einrichtung zur visuellen Kontrolle einer einwandfreien Funktion von Flüssigkristallanzeigen, LCD's, die durch Beaufschlagung von Segmentelektroden der LCD mit einer Testspannung (11, 27, 37, 51) einen Fehlerfall in einer Segmentelektrode aufgrund einer Unterbrechung in ihrer elektrischen Signalzuleitung optisch durch kontrollierbares Blinken sichtbar macht, wobei die LCD aus einer Deckglasplatte (1), einem Zellenraum (6) und einer Rückglasplatte (2) aufgebaut ist und wobei die Segmentelektroden aus Deckelektroden (1a, 21, 32, 41, 61-67) und einer oder mehreren Rückelektroden (2a, 22, 31, 42, 68) bestehen und die Deckelektroden (1a, 21, 32, 41) auf der den mit dem Flüssigkristall gefüllten Zellenraum (6) zur Sichtseite abschließenden Deckglasplatte (1) und die Rückelektrode (68) oder die Rückelektroden (2a, 22, 31, 42) auf der der Deckglasplatte (1) gegenüberliegenden, den Zellenraum (6) anderseitig begrenzenden Rückglasplatte (2) jeweils auf der dem Zellenraum (6) zugewandten Fläche angebracht sind,
    dadurch gekennzeichnet,
    daß die Beaufschlagung der Segmentelektroden mit der Testspannung kapazitiv, mittels einer der Rückglasplatte der LCD gegenüberliegenden, diese überdeckenden, durchgehend leitfähigen, von der oder den Rückelektroden (2a, 22, 31, 42, 68) der LCD galvanisch isolierten Elektrode (10, 24, 34, 46) erfolgt.

2. Einrichtung nach Anspruch 1, dadurch gekennzeichnet, daß die die Rückglasplatte der LCD überdeckende Elektrode (10, 24, 34) als gitterförmiges Geflecht zum zusätzlichen Zweck einer Lichttransmission ausgebildet ist.

3. Einrichtung nach Anspruch 1, dadurch gekennzeichnet, daß die die Rückglasplatte der LCD überdeckende Elektrode (10, 24, 34, 46) gleichzeitig als Reflektor ausgebildet ist.

4. Einrichtung nach Anspruch 1, dadurch gekennzeichnet, daß die Testspannung einen Rechteck-Spannungsverlauf aufweist.

5. Einrichtung nach Anspruch 1, dadurch gekennzeichnet, daß die Testspannung dem Kurvenverlauf einer Exponentialfunktion folgt.

6. Einrichtung nach den Ansprüchen 4 oder 5, dadurch gekennzeichnet, daß die Testspannung auf eine Frequenz im Bereich von 0,1 Hz bis 3 Hz eingestellt ist.

7. Einrichtung nach den Ansprüchen 1 bis 3, gekennzeichnet durch die Ausbildung einer Kontrollschleife für die Testspannung dergestalt, daß eine Ankopplung einer Testspannungssignalquelle (11) über eine Zuleitung (9) an die Elektrode (10) vorgesehen ist und eine Abgangsleitung (14) von der Elektrode (10) über einen Widerstand (12) der Kontrollschleife geführt ist, an dem das Vorhandensein einer korrekten Testspannung an einem Abgriff (13) überprüfbar ist.

8. Einrichtung nach Anspruch 1, dadurch gekennzeichnet, daß die kapazitive Beaufschlagung der Segmentelektroden (21, 22) mit der Testspannung zusätzlich mittels einer die Deckglasplatte (1) der LCD überdeckenden, durchgehend leitfähigen, von den Segmentelektroden (21, 22) galvanisch isolierten, transparenten Elektrode (29) erfolgt.

9. Einrichtung nach den Ansprüchen 1 und 8, dadurch gekennzeichnet, daß die Beaufschlagung der Segmentelektroden mit der Testspannung (27) gleichzeitig über die die Rückglasplatte (2) der LCD überdeckende Elektrode (24) und über die die Deckglasplatte (1) der LCD überdeckende, transparente Elektrode (29) erfolgt.

10. Einrichtung nach Anspruch 1, dadurch gekennzeichnet, daß die Einkopplung der Testspannung (51) über eine hinter der LCD angeordnete Beleuchtungsfolie (47) nach dem Elektro-Lumineszenz-Prinzip erfolgt, dergestalt daß die flächenhaft leitende Beleuchtungsfolie neben einer Ansteuerspannung aus einem Ansteuertransformator (50) für die Beleuchtung auch mit der Testspannung für die Einkopplung auf die Segmentelektroden (41, 42) beaufschlagt wird.

## Claims

1. A device for the visual monitoring of a perfect functioning of liquid-crystal displays (LCDs), which device visually reveals a fault case in a segment electrode due to an interruption in its electrical signal supply conductor by monitorable flashing as a result of applying a test voltage (11, 27, 37, 51) to segment electrodes of the LCD, the LCD being made up of a top glass plate (1), a cell cavity (6) and a rear glass plate (2) and the segment electrodes comprising top electrodes (1a, 21, 32, 41, 61 to 67) and one or more rear electrodes (2a, 22, 31, 42, 68) and the top electrodes (1a, 21, 32, 41) being provided on the top glass plate (1) which closes off the cell cavity (6) filled with the liquid crystal on the viewing side and the rear electrode (68) or the rear electrodes (2a, 22, 31, 42) being provided on the rear glass plate (2) situated opposite the top glass plate (1) and bounding the cell cavity (6) on the other side, in each case on the surface facing the cell cavity (6), characterized in that the test voltage is applied to the segment electrodes capacitively by means of an electrode (10, 24, 34, 46) which is situated opposite the rear glass plate of the LCD, covers the latter, is continuously conductive and is isolated electrically from the rear electrode or electrodes (2a, 22, 31, 42, 68) of the LCD.

2. A device according to Claim 1, characterized in that the electrode (10, 24, 34) covering the rear glass plate of the LCD is formed as a grid-like mesh for the additional purpose of light transmission.

3. A device according to Claim 1, characterized in that the electrode (10, 24, 34, 46) covering the rear glass plate of the LCD is simultaneously formed as reflector.

4. A device according to Claim 1, characterized in that the test voltage has a square-wave voltage pattern.

5. A device according to Claim 1, characterized in that the test voltage follows the curve pattern of an exponential function.

6. A device according to Claims [sic] 4 or 5, characterized in that the test voltage is set to a frequency in the range from 0.1 Hz to 3 Hz.

7. A device according to Claims 1 to 3, characterized by the formation of a monitoring loop for the test voltage so that a coupling of a test-voltage signal source (11) is provided via a supply conductor (9) to the electrode (10) and an output conductor (14) is routed from the electrode (10) via a resistor (12) of the monitoring loop, across which resistor (12) the presence of a correct test voltage can be checked at a tap (13).

8. A device according to Claim 1, characterized in that the test voltage is capacitively applied to the segment electrodes (21, 22) additionally by means of a transparent electrode (29) which covers the top glass plate (1) of the LCD, is continuously conductive and is electrically insulated from the segment electrodes (21, 22).

9. A device according to Claims 1 and 8, characterized in that the test voltage (27) is simultaneously applied to the segment electrodes via the electrode (24) covering the rear glass plate (2) of the LCD and via the transparent electrode (29) covering the top glass plate (1) of the LCD.

10. A device according to Claim 1, characterized in that the test voltage (51) is coupled in via an illumination foil (47), disposed behind the LCD, by the electroluminescence principle so that, in addition to a drive voltage from a drive transformer (50) for the illumination, the test voltage is also applied to the two-dimensionally conducting illumination foil for coupling into the segment electrodes (41, 42).


**Revendications**

1. Dispositif pour le contrôle visuel d'un fonctionnement irréprochable d'afficheurs à cristaux liquides, LCD, qui, par l'application d'une tension de test (11, 27, 37, 51) à des électrodes de segment des LCD, assurent, par un clignotement contrôlable, la mise en évidence optique d'un cas de défaut dans une électrode de segment dû à une interruption dans sa ligne d'arrivée de signal électrique, le LCD étant constitué d'une plaque de verre supérieure (1), d'un espace cellulaire (6) ainsi que d'une plaque de verre postérieure (2) et les électrodes de segment étant composées d'électrodes supérieures (1a, 21, 32, 41, 61 à 67) et d'une ou plusieurs électrodes postérieures (2a, 22, 31, 42, 68) et, respectivement sur la face dirigée vers l'espace cellulaire (6), les électrodes supérieures (1a, 21, 32, 41) étant disposées sur la plaque de verre supérieure (1) fermant l'espace cellulaire (6) du côté visible et l'électrode postérieure (68) ou les électrodes postérieures (2a, 22, 31, 42) étant disposées sur la plaque de verre postérieure (2) opposée à la plaque de verre supérieure (1), fermant l'espace cellulaire (6) de l'autre côté,
caractérisé par le fait
que l'application de la tension de test aux électrodes de segment a lieu par voie capacitive au moyen d'une électrode (10, 24, 34, 46) située à l'opposé de la plaque de verre postérieure du LCD, recouvrant celle-ci, étant continûment conductrice et galvaniquement isolée de l'électrode ou des électrodes postérieures (2a, 22, 31, 42, 68) du LCD.

2. Dispositif selon la revendication 1,
caractérisé par le fait
que l'électrode (10, 24, 34) recouvrant la plaque de verre postérieure du LCD est réalisée sous forme de treillis pour assumer la fonction supplémentaire d'une transmission de lumière.

3. Dispositif selon la revendication 1,
caractérisé par le fait
que l'électrode (10, 24, 34, 46) recouvrant la plaque de verre postérieure du LCD est simultanément réalisée en forme de réflecteur.

4. Dispositif selon la revendication 1,
caractérisé par le fait

que la tension de test présente une courbe de tension rectangulaire.

5. Dispositif selon la revendication 1,
caractérisé par le fait
que la tension de test suit l'allure d'une courbe d'une fonction exponentielle.

6. Dispositif selon l'une quelconque des revendications 4 ou 5,
caractérisé par le fait
que la tension de test est réglée sur une fréquence située dans la gamme de 0,1 Hz à 3 Hz.

7. Dispositif selon l'une quelconque des revendications 1 à 3,
caractérisé par la réalisation d'une boucle de contrôle pour la tension de test, de telle sorte qu'il est prévu un raccordement d'une source de signal de tension de test (11), par l'intermédiaire d'une ligne d'arrivée (9), à l'électrode (10) et qu'une ligne de départ (14) est amenée de l'électrode (10) par une résistance (12) de la boucle de contrôle dont une prise (13) permet de vérifier la présence d'une tension de test correcte.

8. Dispositif selon la revendication 1,
caractérisé par le fait
que l'application capacitive de la tension de test aux électrodes de segment (21, 22) a lieu, en plus, au moyen d'une électrode transparente (29) recouvrant la plaque de verre supérieure (1) du LCD, continûment conductrice, galvaniquement isolée des électrodes de segment (21, 22).

9. Dispositif selon l'une quelconque des revendications 1 et 8,
caractérisé par le fait
que l'application capacitive de la tension de test (27) aux électrodes de segment a lieu simultanément par l'intermédiaire d'une électrode (24) recouvrant la plaque de verre postérieure (2) du LCD et par l'intermédiaire d'une électrode transparente (29) recouvrant la plaque de verre supérieure (1) du LCD.

10. Dispositif selon la revendication 1,
caractérisé par le fait
que l'application de la tension de test (51) se fait selon le principe électroluminescent par l'intermédiaire d'un panneau d'éclairage électroluminescent (47) disposé derrière le LCD, de telle sorte qu'audit panneau électroluminescent à conduction superficielle est appliquée non seulement une tension de commande provenant d'un transformateur de commande (50) pour l'éclairage, mais aussi la tension de test pour l'application aux électrodes de segment (41, 42).

FIG.1

FIG. 2

FIG.3

FIG. 4

FIG. 5